# EUROPÄISCHE PATENTSCHRIFT

(11) **EP 3 465 650 B1**
(45) Veröffentlichungstag und Bekanntmachung des Hinweises auf die Patenterteilung: **03.08.2022**
(21) Anmeldenummer: 17736561.6
(22) Anmeldetag: 06.06.2017
(51) Int. Cl.: G08G 1/01, G08G 1/015, G08G 1/052, H04W 4/40

(54) **VERFAHREN UND SYSTEM ZUM ERMITTELN VON RISIKOBEREICHEN IM STRASSENVERKEHR**
METHOD AND SYSTEM FOR DETERMINING RISK AREAS IN ROAD TRAFFIC
PROCÉDÉ ET SYSTÈME POUR DÉTERMINER DES ZONES À RISQUE DANS LA CIRCULATION ROUTIÈRE

(30) Priorität: 03.06.2016 DE 102016110331
(43) Veröffentlichungstag der Anmeldung: 10.04.2019
(73) Patentinhaber: Coodriver GmbH, 82031 Grünwald (DE)
(72) Erfinder: AGUIAR, Ana, 4050634 Porto (PT); HILDEBRANDT, Walter, 82031 Grünwald (DE)
(74) Vertreter: Manasse, Uwe
(86) Internationale Anmeldenummer: PCT/DE2017/100476
(87) Internationale Veröffentlichungsnummer: WO 2017/206998

(56) Entgegenhaltungen:
- EP-A1- 0 763 807
- US-A1- 2006 105 815
- US-A1- 2013 203 377
- US-A1- 2013 288 707
- US-A1- 2015 326 624

## Beschreibung

Die vorliegende Patentanmeldung bezieht sich auf Verfahren und Systeme zum Ermitteln von Risikobereichen im Straßenverkehr.

Im öffentlichen Raum, insbesondere im Straßenverkehr, entstehen fortwährend Verkehrssituationen, die Gefahren für die Verkehrsteilnehmer darstellen.

Immer mehr Verkehrsteilnehmer verfügen über mobile Geräte, die in der Lage sind, Daten bezüglich ihrer Position zu erfassen. Diese mobilen Geräte können Smartphones oder auch in Fahrzeuge fest eingebaute Geräte sein und kommunizieren über drahtlose Netzwerke. Derartige Geräte können Positionsdaten mittels GPS, mittels Network-Assisted Location oder mittels anderer Maßnahmen zur Standortbestimmung ermitteln.

Bekannt sind sogenannte Geofences, die durch einen Benutzer eines mobilen Gerätes eingerichtet werden können, um andere Benutzer zu erfassen, sobald diese einen durch Geofences eingeschränkten Raum betreten oder diesen verlassen. Ein Geofence stellt einen fest umrissenen Raum dar, der beispielsweise über eine digitale Karte (digital map) eingerichtet werden kann.

US 2006/105815 A1 offenbart, die Anzahl mobiler Geräte zu bestimmen, die sich an einem bestimmten Zeitpunkt innerhalb eines geographischen Gebiets befinden. Ein Server erhält geographische Ortsdaten von mobilen Geräten. Parameter dieser Geräte werden zusammengesetzt. Eine Zählervariable wird mit der Zeit dekrementiert.

US 2013/0203377 A1 offenbart Abschätzen einer Anzahl von Geräten in einem bestimmten Gebiet unter Verwendung von Ortsinformation der Geräte. Eine Anzahl von Nutzern in einem Gebiet wird gezählt. Information über Start- und Endzeiten der Geräte wird eingeholt.

US 2015/326624 A1 offenbart Übersenden von Ortsinformationen eines mobilen Geräts an einen Server. Eine Dichte von Nutzern wird bestimmt.

US 2013/288707 A1 offenbart Einholen von Positionsdaten mobiler Geräte in einer "counting target region". Eine Anzahl mobiler Geräte in einer "analysis target region" wird anhand Positions- und Zeitinformationen bestimmt. Eine Anzahl von "intaked terminals" wird von einer Anzahl von mobilen Geräten (mobile terminals) subtrahiert.

Der vorliegenden Erfindung liegt die Aufgabe zugrunde, Verkehrsteilnehmer für andere sichtbar zu machen. Insbesondere sollen Navigationssysteme oder Assistenzsysteme über Verkehrsteilnehmer informiert werden, etwa um sich an eine aktuelle Verkehrssituation anpassen zu können.

Die Erfindung betrifft ein Verfahren gemäß dem Anspruch 1.

Gemäß einer besonderen Ausführungsform umfasst das Verfahren ferner Empfangen von Angaben über einen Typ eines Fortbewegungsmittels, der mit dem mobilen Gerät assoziiert ist, wobei Inkrementieren einer Zählervariablen ferner Inkrementieren einer Zählervariablen für den Typ umfasst.

Vorzugsweise umfasst das Verfahren ferner Empfangen einer Anforderung von einem zweiten mobilen Gerät und Übermitteln von einer oder mehreren Zählervariablen in einem vorbestimmten geographischen Gebiet, in dem die Position des zweiten mobilen Geräts liegt.

Gemäß der Erfindung ist der vorbestimmte Wert ein Erwartungswert, der eine mittlere Verweildauer des mobilen Geräts in dem vorbestimmten geographischen Gebiet für einen mit dem mobilen Gerät assoziierten Typ eines Fortbewegungsmittels angibt.

Die Erfindung betrifft auch ein System gemäß dem Anspruch 4. Vorzugsweise ist der Server ferner eingerichtet, für jedes geographische Gebiet, in dem eine empfangene Position liegt, eine oder mehrere Zählervariablen und Zeitvariablen in einer Datenstruktur zu speichern.

Insbesondere kann der Server eingerichtet sein, Angaben über Typen von Fortbewegungsmitteln zu empfangen, die mit den mobilen Geräten assoziiert sind, wobei Inkrementieren einer Zählervariablen ferner Inkrementieren einer jeweiligen Zählervariablen für den Typ von Fortbewegungsmittel umfasst.

Gemäß einer besonderen Ausfuhrungsform ist der Server ferner eingerichtet, eine Anforderung von einem mobilen Gerät zu empfangen und eine oder mehrere Zählervariablen in einem vorbestimmten geographischen Gebiet, in dem die Position des mobilen Geräts liegt, zu ermitteln.

Der vorbestimmte Wert ist ein Erwartungswert, der eine mittlere Verweildauer eines mobilen Geräts in dem vorbestimmten Gebiet für einen Typ von Fortbewegungsmittel angibt.

Eine erfinderische Tätigkeit wird insbesondere durch Kombinieren von mehreren Zählern, die mit jeweiligen geographischen Gebieten assoziiert sind, erzielt. Dadurch, dass für jedes vorbestimmte geographische Gebiet eine Zählervariable und für jeden Verkehrsteilnehmer auf diesem Gebiet eine separate Zeitvariable unterhalten wird, entsteht eine Datenstruktur, die übersichtlich und effizient auf sicherheitsrelevante Orte hin untersucht werden kann. Neben einer schnellen und zielgerichteten Analyse dienen Ausführungsformen der Erfindung auch als Warnsystem, das Verkehrsteilnehmer, Navigationssysteme oder Assistenzsysteme mit geringem rechnerischen Aufwand vor bestimmten Verkehrssituationen warnen kann und somit die Verkehrssicherheit erhöht. Insbesondere gewährleistet die Erfindung die Anonymität der Verkehrsteilnehmer, da diese nicht identifiziert und konkret nachverfolgt werden.

### KURZE BESCHREIBUNG DER ZEICHNUNGEN

- Figur 1: zeigt ein Verfahren gemäß Ausführungsformen der Erfindung.
- Figur 2: zeigt ein System gemäß Ausführungsformen der Erfindung.
- Figur 3: zeigt eine beispielhafte Verkehrssituation, die mit erfindungsgemäßen Ausführungsformen erfasst und/oder analysiert werden kann.

### AUSFÜHRLICHE BESCHREIBUNG

Eine erste Ausführungsform der Erfindung umfasst Empfangen geographischer Positionsdaten von einem mobilen Gerät. Das mobile Gerät kann ein GPS-Tracker oder ein GPS-fähiges Mobiltelefon sein oder eine Bordelektronik eines Autos, einer Eisenbahn, Straßenbahn oder anderer Fahrzeuge, die in Lage sind, ihre geographische Position zu erfassen und diese anderen Geräten mitzuteilen, beispielsweise über eine drahtlose Verbindung. Die Positionsdaten können von einem oder mehreren Servern empfangen werden. Mobile Geräte können ihre Positionsdaten beispielsweise mittels einer App bereitstellen, die auf dem jeweiligen Gerät installiert ist und fortlaufend Positionen des Gerätes erfasst und diese an einen oder mehrere Server sendet.

Als Reaktion auf das Empfangen einer Position an einem Server wird von diesem eine Zählervariable inkrementiert, die gemäß einer ersten Ausführungsform mit der empfangenen Position und gemäß einer zweiten Ausfuhrungsform mit einem geographischen Gebiet, in dem diese Position liegt, assoziiert ist.

Ein solches geographisches Gebiet kann ein rechteckiges Feld in einem geographischen Raster (grid) sein. In bestimmten Ausführungsformen entspricht die Größe eines solchen Feldes der Genauigkeit der Positionsdaten, sodass beispielsweise eine Feldgröße von 100m verwendet wird, wenn Positionsdaten eine Genauigkeit von 100m haben. Jedoch können Feldgrößen auch größer sein als die Positionsgenauigkeit.

Ist mit der Position beziehungsweise dem Gebiet bisher keine Zählervariable assoziiert, so wird für diese Position beziehungsweise das Gebiet eine neue Zählervariable definiert und inkrementiert. Das Vorliegen einer solchen Zählervariablen kann anhand einer geeigneten Datenstruktur ermittelt werden, beispielsweise einer Hashtabelle oder einem ein- oder mehrdimensionalen Array. In der Datenstruktur dienen die Positionen beziehungsweise Gebiete als Index, um Daten, die mit diesen assoziiert sind, nachzuschlagen. Solche nachschlagbaren Daten umfassen beispielsweise eine Zählervariable je Position beziehungsweise je Gebiet.

Gemäß einer Ausführungsform wird die Zählervariable um einen konstanten Wert inkrementiert, beispielsweise um den Wert Eins. Somit stellt der Wert der Zählervariable die Anzahl der Verkehrsteilnehmer dar, die sich in dem erfassten Gebiet oder an der Position befinden.

In einer besonderen Ausfuhrungsform kann der Zähler einfach binär sein und gibt lediglich an, ob sich in dem betreffenden Gebiet oder an der Position Verkehrsteilnehmer aufhalten.

Soweit mit der Position eines Teilnehmers auch dessen Richtung und Geschwindigkeit übermittelt wurde, kann berechnet werden, wann der Teilnehmer einen vorbestimmten Radius um die aktuelle Position des Teilnehmers oder sein Gebiet verlassen haben wird, und kann ferner anhand der Richtung bestimmt werden, an welcher Position oder in welchem Gebiet der Teilnehmer sich dann voraussichtlich befinden wird. Überschreitet die Geschwindigkeit einen vorgegebenen Schwellenwert, kann eine Warnung an solche Verkehrsteilnehmer ausgegeben werden, die sich in einem vorbestimmten Radius um die voraussichtliche Position oder in einem Gebiet, in dem diese liegt, befinden. Diese Ausführungsform lässt sich etwa als Warnsystem für Verkehrsteilnehmer in der Nähe von Bahnübergängen einsetzen, wobei die Teilnehmer vor einem nahenden Zug gewarnt werden. Eine solche Warnung kann von einem Server, der die Datenstruktur verwaltet, ausgegeben werden, beispielsweise als Antwort auf eine Anforderung von einem mobilen Gerät oder einem Navigationssystem oder einem Assistenzsystem.

Zusätzlich zu dem Inkrementieren der Zählervariablen für diese Zählervariable wird eine neue Zeitvariable definiert. Dies erfolgt unabhängig davon, ob die Zählervariable neu definiert wurde oder ob bereits eine Zeitvariable für diese Zählervariable beziehungsweise diese Position beziehungsweise das betreffende Gebiet existiert. Die Zeitvariable wird mit einem vorbestimmten Zeitwert initialisiert. Dieser Zeitwert kann eine standardmäßige Verweildauer des Verkehrsteilnehmers an der übermittelten Position beziehungsweise dem betreffenden Gebiet sein oder auf einer geschätzten Verweildauer basieren. Beispielsweise kann eine durchschnittliche Verweildauer für das Gebiet oder einen vorbestimmteen Umkreis der Position verwendet werden oder auch eine Verweildauer, die auf dem Typ des Verkehrsteilnehmers basiert, soweit diese Information vorliegt. Beispielsweise kann das mobile Gerät diesen Typ mit übermitteln. In bestimmten Ausführungsformen kann für jeden Typ von Verkehrsteilnehmer eine vorbestimmte Verweildauer verwendet werden, beispielsweise eine erste Verweildauer für ein Auto, eine zweite Verweildauer für eine Straßenbahn und eine dritte Verweildauer für einen Fußgänger. Zusätzlich oder alternativ kann die Verweildauer anhand des konkreten Ortes bestimmt werden, etwa aus Erfahrungswerten für Verweildauern an diesem Ort. Die Verweildauer wird vorzugsweise in Sekunden angegeben. Die Verweildauer kann so bestimmt werden, dass ein Teilnehmer innerhalb dieser Verweildauer einen vorbestimmten Radius um die Position des Teilnehmers oder auch das betreffende Gebiet verlassen haben wird.

Soweit mit den Positionsdaten eines Teilnehmers auch dessen Geschwindigkeit ermittelt wurde, wird gemäß einer Ausführungsform die Zeitvariable auf einen anhand der Geschwindigkeit ermittelten Zeitwert gesetzt. Bei hoher Geschwindigkeit ist dieser Zeitwert kürzer als bei geringer Geschwindigkeit. Der Zeitwert kann so berechnet werden, dass der Teilnehmer bei der gegebenen Geschwindigkeit einen vorbestimmten Radius um die Position des Teilnehmers beziehungsweise das Gebiet, den dem die Position liegt, innerhalb dieses Zeitwerts verlassen hat.

In Ausführungsformen mit separaten Zählervariablen je Teilnehmertyp kann zusätzlich zu den separaten Zählervariablen ein Gesamtzähler, der typunabhängig zählt, vorgesehen sein. Dieser wird unabhängig von dem Typ inkrementiert beziehungsweise dekrementiert, wie weiter unten erläutert ist.

Jedes Mal, wenn eine Position empfangen wird, wird eine neue Zeitvariable für diese Position oder das vorbestimmte Gebiet dieser Position angelegt, wie oben erläutert, und in der Datenstruktur unter dieser Position beziehungsweise dem Gebiet gespeichert. Daher können für die gleiche Position/ das gleiche Gebiet mehrere Zeitvariablen existieren, die jeweils die erwartete Verweildauer für einen Verkehrsteilnehmer an dieser Position/diesem Gebiet repräsentieren. Soweit diese Zählervariablen mit unterschiedlichen Verweildauern initialisiert sind, werden auch diese Verweildauern in der Datenstruktur abgelegt.

Nach dem Anlegen und Initialisieren der Zeitvariablen wird diese fortlaufend dekrementiert. Vorzugsweise wird das Dekrementieren in gleichmäßigen Zeitintervallen vorgenommen, beispielsweise einmal pro Sekunde. Sämtliche Zeitvariablen werden um den Zeitwert dekrementiert, der seit dem Initialisieren beziehungsweise dem letzten Dekrementieren verstrich.

Erreicht eine Zeitvariable den Wert Null, wird die Zählervariable, mit der diese Zeitvariable assoziiert ist, um den Wert Eins dekrementiert. Mehrere Zeitvariablen, die mit der gleichen Zählervariable assoziiert sind, führen unabhängig voneinander zu Dekrementieren der Zählervariable, wenn sie jeweils den Wert Null erreichen. Auf diese Weise modelliert die Zählervariable die Anzahl von Verkehrsteilnehmern, die zu einem bestimmten Zeitpunkt an der zugehörigen Position beziehungsweise dessen Gebiet vermutet werden.

Durch die obigen Ausführungsformen wird eine Datenstruktur, die Positionen/Gebiete und Zählervariablen sowie Zeitvariablen enthält, fortwährend aktualisiert. Die Datenstruktur liefert somit für den Bereich der abgedeckten Positionen oder Gebiete ein Gesamtbild von Verkehrssituationen. Die Datenstruktur kann somit gemäß verschiedenen Ausführungsformen der Erfindung verwendet werden, um Verkehrsteilnehmer zu warnen. Gemäß weiteren Ausführungsformen kann die Datenstruktur verwendet werden, um besonders häufig frequentierte oder gefährliche Bereiche zu identifizieren. Warn- und Identifizierungsfunktionalität können als Reaktion auf ein Ereignis automatisch erfolgen oder auch als Reaktion auf eine Anforderung, beispielsweise eine Anforderung, die mittels einer App an den Server gesendet wird.

In einer besonderen Ausführungsform kann die bisher diskutierte erste Datenstruktur einer Analyse auf lokale und/oder globale Maxima unterzogen werden, beispielsweise als Reaktion auf eine Anforderung von einem mobilen Gerät an einen Server. Hierzu kann für einen vorbestimmten Zeitpunkt eine zweidimensionale zweite Datenstruktur, beispielsweise ein Array, erstellt werden, dessen Dimensionen den beiden räumlichen Dimensionen der Positionsdaten entsprechen. Anschließend wird jedes der Felder der zweiten Datenstruktur mit dem Wert der jeweiligen Zählervariablen zu dem betreffenden Zeitpunkt belegt, wobei eine Zählervariable je Feld vorgesehen ist. Koordinaten in der zweiten Datenstruktur, für die keine Zählervariablen in der ersten Datenstruktur existieren, werden auf den Wert Null gesetzt. Jedes Feld der Datenstruktur entspricht in einer ersten Ausfiihrungsform genau einer Position. In einer zweiten Ausführungsform entspricht jedes Feld einem Gebiet, in dem mehrere Positionen liegen können.

Jedoch kann die zweite Datenstruktur auch andere Auflösungen wiedergeben. In einer bestimmten Ausführungsform kann die Auflösung der zweiten Datenstruktur vorgegeben werden, indem beispielsweise festgelegt ist, welchem Abstand in der Natur ein Feld in der Datenstruktur entspricht. Unterschiedliche Positionen oder Gebiete, die präziser sind als ein solcher Abstand, werden dann auf das gleiche Feld abgebildet. Beispielsweise kann festgelegt sein, dass jedes Feld 50m in der Natur entspricht. Unterschiedliche Positionen oder Gebiete mit einer Genauigkeit von einzelnen Metern können dann auf das gleiche Feld abgebildet werden, so dass ein Feld in x-Richtung für den Bereich 40m bis 45m die unterschiedlichen Positionsangaben 42m, 40m und 43m wiedergibt.

Gemäß einer Ausführungsform wird nun dasjenige Feld mit dem höchsten Wert in der zweiten Datenstruktur identifiziert. Diese Koordinate entspricht dem Ort mit dem höchsten Verkehrsaufkommen zum betreffenden Zeitpunkt. Dieser Ort kann als besonders riskant betrachtet werden. Gemäß besonderen Ausführungsformen können Verkehrsteilnehmer, die sich diesem Ort nähern, mittels einer Nachricht an ihre mobilen Geräte gewarnt werden, oder Navigationssysteme oder Assistenzsysteme automatisch oder auf Anforderung verständigt werden.

Alternativ oder zusätzlich zum Identifizieren eines globalen Maximums kann auf der zweiten Datenstruktur eine Analyse auf lokale Maxima durchgeführt werden. Hierzu kann jeder einschlägige Algorithmus verwendet werden, der unter Betrachtung von Nachbarschaften unter den Koordinaten diejenigen Felder in der zweiten Datenstruktur identifiziert, deren Werte höher sind als die der jeweiligen Umgebung. Auch diese lokalen Maxima können verwendet werden, um Verkehrsteilnehmer, die sich entsprechenden Orten nähern, zu warnen. In einer bestimmten Ausfuhrungsform kann jedes Mal wenn, wie oben diskutiert, Positionsdaten von einem mobilen Gerät empfangen werden, eine Prüfung durchgeführt werden hinsichtlich der Nähe zu einem der identifizierten Maxima und eine Warnung an das betreffende Gerät gesendet werden, wenn sich das Gerät innerhalb eines vorbestimmten Radius von dem Maximum befindet. Liegt neben der Position auch eine Richtungsangabe des Geräts vor, so kann das Senden der Warnung davon abhängen, ob ein Maximum in der Bewegungsrichtung des Geräts liegt.

Alternativ oder zusätzlich zu einer Maximumanalyse können auch solche Felder identifiziert werden, die einen vorgegebenen Schwellenwert überschreiten. Beispielsweise werden alle Felder ermittelt, in denen sich mehr als N Verkehrsteilnehmer eines vorgegebenen Typs oder auch sämtlicher Typen befinden oder es werden Felder mit mehr als M Verkehrsteilnehmern ermittelt, die eine vorgegebene Geschwindigkeit überschreiten.

Alternativ zu einer zweidimensionalen Datenstruktur kann eine dreidimensionale Datenstruktur, etwa ein dreidimensionaler Array, verwendet werden. Die dritte Dimension entspricht der Zeit. Der dreidimensionale Array kann aus zwischengespeicherten zweidimensionalen Arrays gebildet werden, die gemäß der obigen Erläuterung erstellt und in gleichmäßigen oder beliebigen vorgegebenen Zeitabständen gespeichert wurden. Als Reaktion auf eine Anforderung an einen Server kann anhand der dreidimensionalen Datenstruktur eine Maximumanalyse für einen vorgegebenen Zeitpunkt, der in der Anforderung enthalten ist, durchgeführt werden, wie etwa eine Maximumanalyse gemäß der obigen Diskussion. Alternativ kann eine Maximumanalyse für einen gesamten gespeicherten Zeitraum durchgeführt werden. So kann gemäß einer bestimmten Ausfiihrungsform ein Maximum für sämtliche Zeitpunkte, die in der dreidimensionalen Datenstruktur erfasst sind, durchgeführt werden. In diesem Fall liefert die Erfindung denjenigen Ort, an dem in diesem Zeitraum die größte Anzahl von Verkehrsteilnehmern gemessen wurde. Dies kann die einzelne größte Anzahl von Verkehrsteilnehmern sein oder alternativ die größte Summe aller Verkehrsteilnehmer, die über den Zeitraum hinweg an einer Position oder in einem Gebiet beobachtet wurde. Alternativ zu einem globalen Maximum können in der dreidimensionalen Datenstruktur auch lokale Maxima bestimmt werden. In diesem Fall liefert die Erfindung Orte, also Positionen oder Gebiete, an denen mehr Verkehrsteilnehmer als in der Nachbarschaft dieser Orte gemessen wurden. Wiederum kann dies lokale Maxima hinsichtlich einer Summe von Verkehrsteilnehmern über einen Zeitraum oder aber eine jeweilige höchste Anzahl von Verkehrsteilnehmern an allen erfassten Zeitpunkten umfassen. In einer Ausführungsform kann die Anforderung eine Angabe darüber enthalten, auf welche Art Maxima ermittelt werden. Beispielsweise kann die Anforderung angeben, dass Summen von Verkehrsteilnehmern über alle erfassten Zeitpunkte verglichen werden sollen oder dass einzelne Anzahlen von Verkehrsteilnehmern zu verschiedenen Zeitpunkten verglichen werden sollen.

Im Folgenden werden einzelne Ausführungsbeispiele anhand der Figuren erläutert.

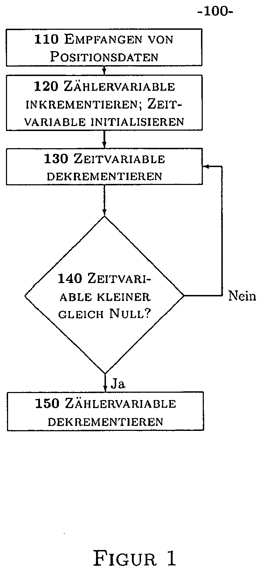

Figur 1 zeigt ein Verfahren 100 zum Ermitteln von Verkehrsdaten. In Schritt 110 werden Positionsdaten von einem mobilen Gerät empfangen. Die Daten können beispielsweise an einem Server empfangen werden. In einer speziellen Ausfuhrungsform wird geprüft, in welchem Feld eines vorbestimmten Rasters eine Position dieser Positionsdaten liegt. Ein solches geographisches Raster kann in Form einer geeigneten Datenstruktur vorliegen. Es wird anschließend geprüft, ob mit einer Position dieser Positionsdaten beziehungsweise mit dem Feld bereits eine Zählervariable assoziiert ist, beispielsweise indem die Position/das Feld in einer Datenstruktur nachgeschlagen wird. Existiert eine solche Zählervariable noch nicht, wird sie neu angelegt und unter der Position beziehungsweise dem Gebiet, das durch das Feld definiert ist, in der Datenstruktur abgelegt. Gemäß besonderen Ausführungsformen, in denen ein Typ des Verkehrsteilnehmers übertragen wurde, beispielsweise ein Auto oder eine Straßenbahn, kann für jeden Typ eine jeweilige Zählervariable für die Position/das Gebiet abgelegt sein. In diesem Fall wird geprüft, ob für den gegebenen Typ bereits eine Zählervariable an dieser Position oder diesem Gebiet existiert, und eine solche Zählervariable gegebenenfalls neu angelegt.

In Schritt 120 wird die Zählervariable, die in der Datenstruktur mit der Position oder dem Gebiet assoziiert ist, inkrementiert. Bei Ausführungsformen, die auch den Typ des Verkehrsteilnehmers berücksichtigen, wird nur die Zählervariable, die dem Typ des Absenders der Position entspricht, inkrementiert. Die Zählervariable wird um den Wert Eins inkrementiert. Außerdem wird eine neue Zeitvariable für die betreffende Position oder das Gebiet angelegt. Dies erfolgt selbst dann, wenn die Position oder das Gebiet bereits existierte, und auch dann, wenn in der Datenstruktur bereits eine oder mehrere Zeitvariablen für die Position oder das Gebiet abgelegt sind. Die Zeitvariable wird mit der Position beziehungsweise dem Gebiet und auch mit der Zählervariable assoziiert, beispielsweise indem sie unter der Position beziehungsweise dem betreffenden Gebiet in der Datenstruktur abgelegt wird. Die Zeitvariable wird mit einer Verweildauer initialisiert, die der erwarteten Zeitdauer entspricht, für die sich der Verkehrsteilnehmer an der betreffenden Position beziehungsweise in dem Gebiet oder auch innerhalb eines vorbestimmten Radius um diese Position aufhalten wird. Dieser Wert kann anhand von Erfahrungswerten bestimmt werden, beispielsweise anhand von Erfahrungswerten für diesen Typ von Verkehrsteilnehmer. In anderen Ausführungsformen kann der Wert auf einer Geschwindigkeit des Verkehrsteilnehmers basieren, soweit diese für den Typ bekannt ist oder mit übermittelt wurde. Alternativ kann ein Standardwert verwendet werden.

Ab diesem Zeitpunkt wird die Zeitvariable fortwährend dekrementiert, wie in Schritt 130 gezeigt. Es wird in regelmäßigen Abständen die verstrichene Zeitdauer subtrahiert.

Bei Schritt 140 wird geprüft, ob die Zeitvariable den Wert Null erreicht hat. Diese Prüfung erfolgt regelmäßig vor oder nach jedem Dekrementieren. Ist die Prüfung negativ, wird das Verfahren 100 bei Schritt 130 fortgesetzt.

Ist die Prüfung positiv, die Zeitvariable also bei Null, wird das Verfahren 100 bei Schritt 150 fortgesetzt. Hier wird die Zählervariable, die mit der Zeitvariable assoziiert ist, dekrementiert. Von der Zählervariable wird der Wert Eins subtrahiert, um anzuzeigen, dass der Verkehrsteilnehmer sich nun an dieser Position beziehungsweise in dem Gebiet oder auch innerhalb eines vorbestimmten Radius um diese Position vermutlich nicht mehr befindet.

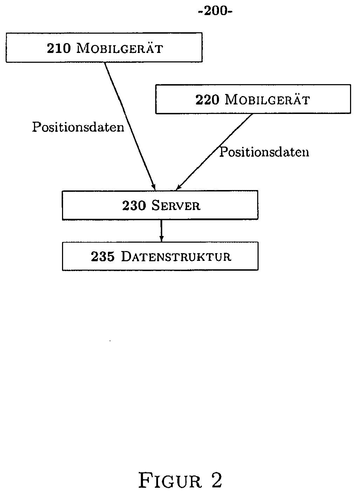

Figur 2 zeigt ein beispielhaftes System 200 zum Ermitteln von Verkehrsdaten.

Die Figur 2 zeigt zwei mobile Geräte 210 und 220, die ihre Positionen an einen Server 230 übermitteln. Der Server 230 enthält eine Datenstruktur 235. Für jede der Positionen wird unabhängig voneinander das Verfahren 100 durchgeführt.

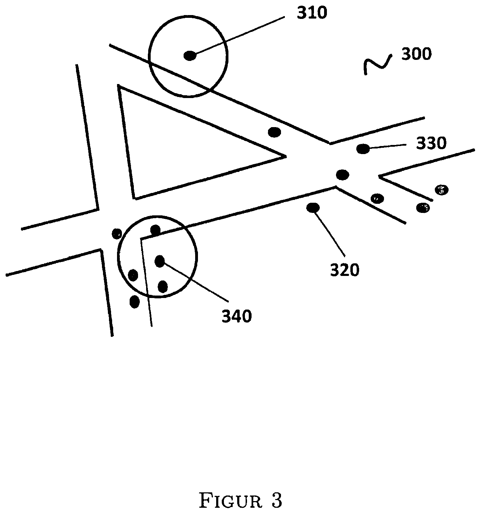

Figur 3 zeigt eine beispielhafte Verkehrssituation. Gezeigt sind drei Straßenkreuzungen sowie mehrere mobile Geräte 310, 320, 330 und 340. Die mobilen Geräte können unterschiedlichen Verkehrsteilnehmern entsprechen. So steht das Gerät 310 für einen Fahrradfahrer mit einem Smartphone, Geräte 320 und 330 für Kraftfahrzeuge und Gerät 340 für einen Fußgänger. Typen von Verkehrsteilnehmern können in Verfahren 100 beziehungsweise System 200 an einen Server übermittelt werden. In bestimmten Ausführungsformen kann der Typ eines Verkehrsteilnehmers auch serverseitig bestimmt werden, beispielsweise anhand einer Position außerhalb einer Straße, aber auf einem Gehweg, oder anhand einer übermittelten Geschwindigkeit in Kombination mit einer Position. So kann beispielsweise eine Geschwindigkeit von 6 km/h und eine Position auf einem Gehweg auf einen Fußgänger hinweisen, während eine Geschwindigkeit von 50 km/h auf der Straße als ein Kraftfahrzeug interpretiert werden kann.

Die gezeigten mobilen Geräte können Positionsdaten und gegebenenfalls Richtungs- und/oder Geschwindigkeitsdaten an einen Server übermitteln, und das Verfahren 100 kann für jede solche Übermittlung durchgeführt werden.

Anhand der empfangenen Daten kann eine Gesamtanalyse der Verkehrssituation durchgeführt werden. Soweit Daten von sämtlichen gezeigten mobilen Geräten empfangen wurden, kann eine Maximumanalyse durchgeführt werden auf einer zweidimensionalen Datenstruktur, die ein Gitter über der gezeigten Verkehrssituation repräsentiert, in dessen Feldern die gezeigten Verkehrsteilnehmer erfasst sind. Eine solche Maximumanalyse kann für den in Figur 3 gezeigten Zeitpunkt ein Maximum im Bereich des mobilen Geräts 340 ermitteln, da sich in einem vordefinierten Umkreis um dieses Gerät drei weitere Verkehrsteilnehmer befinden. Besonders vorteilhaft ist eine Maximumanalyse, die Anzahlen von Verkehrsteilnehmern in vergleicht, wie oben ausgeführt wurde.

In weiteren Ausführungsformen kann die gleiche Verkehrssituation über einen Zeitraum verfolgt werden, wobei in vorgegebenen Zeitabständen die gesamte Datenstruktur gespeichert wird. Als Reaktion auf eine Anforderung können sämtliche Datenstrukturen zu einer dreidimensionalen Datenstruktur vereinigt werden, beispielsweise zu einem dreidimensionalen Array, und kann beispielsweise ein Zeitpunkt ermittelt werden, an dem am meisten Verkehrsteilnehmer erfasst waren. Alternativ kann ermittelt werden, an welchen Punkten über den Zeitraum hinweg sich die meisten Verkehrsteilnehmer aufhielten. Als weitere Alternative kann bestimmt werden, an welchem Ort sich Verkehrsteilnehmer mit den höchsten Geschwindigkeiten aufhielten. Ferner kann ermittelt werden, zu welchen Tageszeiten oder an welchen Wochentagen/Monaten/Jahren sich am meisten oder auch am wenigsten Verkehrsteilnehmer an bestimmten vorgegebenen Orten aufhielten.

Durch die Erfindung wird es somit möglich, eine umfassende Analyse von Verkehrssituationen zu erzeugen. Gleichzeitig ermöglicht die Erfindung das Ausgeben von Warnungen an einzelne Verkehrsteilnehmer, die sich einer schwierigen Verkehrssituation nähern, beispielsweise einem Ort, der häufig von Fahrzeugen mit überhöhter Geschwindigkeit aufgesucht wird. Ein besonderer Vorteil der Erfindung besteht darin, dass die Verkehrsteilnehmer nicht identifiziert zu werden brauchen, sondern anonym bleiben; eine IP oder ähnliche Daten sind nicht erforderlich, um die Erfindung anzuwenden. Ferner kann die Erfindung ohne Anpassungsaufwand an beliebigen Infrastrukturen angewendet werden, soweit diese zur zuverlässigen Übermittlung von geographischen Daten an einen Server in der Lage sind. Weitere Vorteile und Ausführungsformen sind aus den beigefügten Ansprüchen ersichtlich.

## Patentansprüche

1. Verfahren, umfassend:
Empfangen, an einem Server (230), von Positionsdaten von einem mobilen Gerät (210, 220);
Inkrementieren, durch den Server (230), einer Zählervariablen, die mit einem vorbestimmten geographischen Gebiet, in dem eine Position der Positionsdaten liegt, assoziiert ist, **gekennzeichnet durch** Initialisieren einer neuen Zeitvariablen, wobei die Zeitvariable auf einen vorbestimmten Wert gesetzt und fortlaufend dekrementiert wird, wobei der vorbestimmte Wert ein Erwartungswert ist, der eine mittlere Verweildauer des mobilen Geräts (210, 220) in dem vorbestimmten geographischen Gebiet für einen mit dem mobilen Gerät (210, 220) assoziierten Typ eines Fortbewegungsmittels angibt;
und Dekrementieren, durch den Server (230), der Zählervariablen als Reaktion auf Ablaufen der Zeitvariablen.

2. Verfahren nach Anspruch 1, ferner umfassend Empfangen von Angaben über einen Typ eines Fortbewegungsmittels, der mit dem mobilen Gerät (210, 220) assoziiert ist, wobei Inkrementieren einer Zählervariablen ferner Inkrementieren einer Zählervariablen für den Typ umfasst.

3. Verfahren nach Anspruch 1 oder 2, ferner umfassend Empfangen einer Anforderung von einem zweiten mobilen Gerät (210, 220) und Übermitteln von einer oder mehreren Zählervariablen in einem vorbestimmten geographischen Gebiet, in dem die Position des zweiten mobilen Geräts (210, 220) liegt.

4. System (200), umfassend:
Ein oder mehrere mobile Geräte (210, 220); und
einen Server (230);
wobei der Server (230)eingerichtet ist, Positionsdaten von den ein oder mehreren mobilen Geräten (210, 220) zu empfangen, eine Zählervariable, die mit einem vorbestimmten geographischen Gebiet, in dem eine Position der Positionsdaten liegt, assoziiert ist, zu inkrementieren, und
**dadurch gekennzeichnet, dass** der Server (230) ferner eingerichtet ist, eine neue Zeitvariable zu initialisieren, wobei die Zeitvariable auf einen vorbestimmten Wert gesetzt und fortlaufend dekrementiert wird, und die Zählervariable als Reaktion auf Ablaufen der Zeitvariablen zu dekrementieren, wobei der vorbestimmte Wert ein Erwartungswert ist, der eine mittlere Verweildauer eines mobilen Geräts (210, 220) in dem vorbestimmten geographischen Gebiet für einen Typ von Fortbewegungsmittel angibt.

5. System (200) nach Anspruch 4, wobei der Server (230) ferner eingerichtet ist, für jedes geographische Gebiet, in dem eine empfangene Position liegt, eine oder mehrere Zählervariablen und Zeitvariablen in einer Datenstruktur zu speichern.

6. System (200) nach Anspruch 4 oder 5, wobei der Server (230) ferner eingerichtet ist, Angaben über Typen von Fortbewegungsmitteln zu empfangen, die mit den mobilen Geräten (210, 220) assoziiert sind, wobei Inkrementieren einer Zählervariablen ferner Inkrementieren einer jeweiligen Zählervariablen für den Typ von Fortbewegungsmittel umfasst.

7. System (200) nach einem der Ansprüche 4 bis 6, wobei der Server ferner eingerichtet ist, eine Anforderung von einem mobilen Gerät (210, 220) zu empfangen und eine oder mehrere Zählervariablen in einem vorbestimmten geographischen Gebiet, in dem die Position des mobilen Geräts (210, 220) liegt, zu ermitteln.

## Claims

1. Method comprising:
a server (230) receiving location data from a mobile device (210, 220);
the server (230) incrementing a counter variable which is associated with a predetermined geographical area in which a location of the location data is situated, **characterized by** initializing a new time variable, wherein the time variable is set to a predetermined value and continuously decremented, wherein the predetermined value is an expected value indicative of an average dwell time of the mobile device (210, 220) in the predetermined geographical area for a type of transportation associated with the mobile device (210, 220);
and the server (230) decrementing the counter variable in response to elapsing of the time variable.

2. Method according to Claim 1, further comprising receiving indications regarding a type of transportation associated with the mobile device (210, 220), wherein incrementing a counter variable further comprises incrementing a counter variable for the type.

3. Method according to Claim 1 or 2, further comprising receiving a request from a second mobile device (210, 220) and communicating one or more counter variables in a predetermined geographical area in which the location of the second mobile device (210, 220) is situated.

4. System (200) comprising:
One or more mobile devices (210, 220); and
a server (230);
wherein the server (230) is configured to receive location data from the one or more mobile devices (210, 220), to increment a counter variable which is associated with a predetermined geographical area in which a location of the location data is situated, and
**characterized in that** the server (230) is further configured to initialize a new time variable, wherein the time variable is set to a predetermined value and continuously decremented, and to decrement the counter variable in response to elapsing of the time variable, wherein the predetermined value is an expected value indicative of an average dwell time of a mobile device (210, 220) in the predetermined geographical area for a type of transportation.

5. System (200) according to Claim 4, wherein the server (230) is further configured to store one or more counter variables and time variables in a data structure for each geographical area in which a received location is situated.

6. System (200) according to Claim 4 or 5, wherein the server (230) is further configured to receive indications regarding types of transportation associated with the mobile devices (210, 220), wherein incrementing a counter variable further comprises incrementing a respective counter variable for the type of transportation.

7. System (200) according to one of Claims 4 to 6, wherein the server is further configured to receive a request from a mobile device (210, 220) and to determine one or more counter variables in a predetermined geographical area in which the location of the mobile device (210, 220) is situated.

## Revendications

1. Procédé, comprenant les étapes consistant à :
recevoir, sur un serveur (230), des données de position provenant d'un appareil mobile (210, 220) ;
incrémenter, par le serveur (230), une variable de compteur qui est associée à une région géographique prédéterminée dans laquelle se trouve une position des données de position,
**caractérisé par** l'initialisation d'une nouvelle variable temporelle, la variable temporelle étant réglée sur une valeur prédéterminée et étant décrémentée en continu, la valeur prédéterminée étant une valeur attendue qui indique une durée de séjour moyenne de l'appareil mobile (210, 220) dans la région géographique prédéterminée pour un type d'un moyen de locomotion associé à l'appareil mobile (210, 220) ;
et décrémenter, par le serveur (230), la variable de compteur en réponse à l'expiration de la variable temporelle.

2. Procédé selon la revendication 1, comprenant en outre la réception d'indications concernant un type d'un moyen de locomotion qui est associé à l'appareil mobile (210, 220), l'incrémentation d'une variable de compteur comprenant en outre l'incrémentation d'une variable de compteur pour le type.

3. Procédé selon la revendication 1 ou 2, comprenant en outre la réception d'une demande de la part d'un deuxième appareil mobile (210, 220) et la transmission d'une ou de plusieurs variables de compteur dans une région géographique prédéterminée dans laquelle se trouve la position du deuxième appareil mobile (210, 220) .

4. Système (200), comprenant :
un ou plusieurs appareils mobiles (210, 220) ; et
un serveur (230) ;
le serveur (230) étant conçu pour recevoir des données de position provenant dudit un ou des plusieurs appareils mobiles (210, 220), pour incrémenter une variable de compteur qui est associée à une région géographique prédéterminée dans laquelle se trouve une position des données de position, et
**caractérisé en ce que** le serveur (230) est en outre conçu pour initialiser une nouvelle variable temporelle, la variable temporelle étant réglée sur une valeur prédéterminée et étant décrémentée en continu, et pour décrémenter la variable de compteur en réponse à l'expiration de la variable temporelle, la valeur prédéterminée étant une valeur attendue qui indique une durée de séjour moyenne d'un appareil mobile (210, 220) dans la région géographique prédéterminée pour un type de moyen de locomotion.

5. Système (200) selon la revendication 4, dans lequel le serveur (230) est en outre conçu pour stocker dans une structure de données une ou plusieurs variables de compteur et variables de temps pour chaque région géographique dans laquelle se trouve une position reçue.

6. Système (200) selon la revendication 4 ou 5, dans lequel le serveur (230) est en outre conçu pour recevoir des indications concernant des types de moyens de locomotion qui sont associés aux appareils mobiles (210, 220), l'incrémentation d'une variable de compteur comprenant en outre l'incrémentation d'une valeur de compteur respective pour le type de moyen de locomotion.

7. Système (200) selon l'une quelconque des revendications 4 à 6, dans lequel le serveur est en outre conçu pour recevoir une demande provenant d'un appareil mobile (210, 220), et pour établir une ou plusieurs variables de compteur dans une région géographique prédéterminée dans laquelle se trouve la position de l'appareil mobile (210, 220).
